(19) Europäisches Patentamt

European Patent Office

Office européen des brevets

(11) **EP 0 898 381 B1**

(12) **EUROPEAN PATENT SPECIFICATION**

(45) Date of publication and mention
of the grant of the patent:
**15.11.2006 Bulletin 2006/46**

(51) Int Cl.:
*H04B 7/005* (2006.01)    *H04L 27/26* (2006.01)

(21) Application number: **98306336.3**

(22) Date of filing: **07.08.1998**

(54) **Equalizing method and equalizer for ofdm receiver**

Verfahren zur Entzerrung und Entzerrer in einem OFDM-Empfänger

Méthode d'égalisation et égaliseur pour un récepteur de signaux OFDM

(84) Designated Contracting States:
**DE FR GB**

(30) Priority: **20.08.1997 KR 9739661**

(43) Date of publication of application:
**24.02.1999 Bulletin 1999/08**

(73) Proprietor: **SAMSUNG ELECTRONICS CO., LTD.**
**Suwon-City, Kyungki-do (KR)**

(72) Inventor: **Ahn, Won-ick**
**Kangnam-gu,**
**Seoul (KR)**

(74) Representative: **Robinson, Ian Michael**
**Appleyard Lees**
**15 Clare Road**
**Halifax HX1 2HY (GB)**

(56) References cited:
**FR-A- 2 738 095       FR-A- 2 743 967**

**Description**

The present invention relates in general to an equalizer and to an equalizing method for compensating for channel distortion in a receiver for receiving a signal transmitted by an orthogonal frequency division multiplexing (OFDM) method.

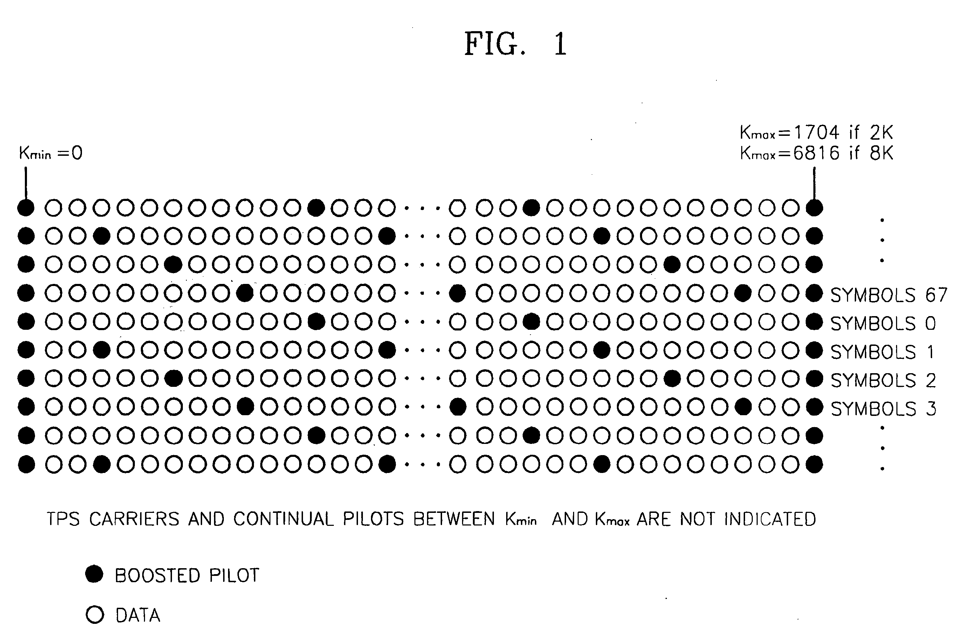

OFDM is a type of multiple carrier modulating method for transmitting a digital signal. In the OFDM method, data is carried by a plurality of sub-carriers and transmitted in parallel during a long symbol period, using a frequency band of the same width as that used for transmitting single carrier data. Since a symbol is determined in a frequency domain in the OFDM method, an equalizer used in the frequency domain is required for compensating for channel distortion of the received symbol. For this, scattered pilots are transmitted in the OFDM method. However, the scattered pilots are not transmitted through fixed sub channels, but are transmitted through different sub channels in every symbol, having a predetermined pattern, as shown in Figure 1.

Namely, as shown in Figure 1, the scattered pilots are repeated using four symbols as one period. Since the scattered pilots are transmitted through the first and final sub channels in a 12 sub channel period, making a second starting point of every symbol different, the characteristics of all the sub channels are estimated by finding out positions to which the scattered pilots are transmitted, calculating estimated values according to all the characteristics of the sub channel, and obtaining the characteristics of the data sub channels between the scattered pilots by interpolating the estimated values of adjacent pilots. However, in the case of performing interpolating in every symbol, since the distance between the scattered pilots becomes 11 sub channels, a compensation error becomes larger when frequency distortion is generated. Also, when channel characteristics are traced in every symbol, a precise filter is required as an interpolating filter since there are 11 sub channels between the scattered pilots.

However, the detailed structure of an equalizer for compensating for the channel distortion is not described in "European Telecommunication Standard" Draft ETS 300 744, March 1997 provided by European Telecommunication Standards Institute (ETSI).

The document FR 2,743,967 describes a quincunxial arrangement of the scattered pilots, of which a fictions pilot symbol is obtained by grouping together each of the extracted scattered pilots which belong to the quincunxial arrangement.

It is an aim of at least preferred embodiments of the present invention to provide an equalizing method which adapts well to the change of time of a channel, reducing the distance between received scattered pilots.

It is another preferred aim of the present invention to provide an equalizer having a simple structure, which adapts well to the change of time of a channel in an OFDM receiver.

It is still another preferred aim of the present invention to provide an equalizer for quickly compensating for amplitude distortion and phase delay in a channel in an OFDM receiver.

According to the present invention there is provided an equalizing method as set forth in claim 1 appended hereto. Also according to the present invention there is provided an equalizer according to claim 8 appended hereto. Further features of the present invention will be apparent from the dependent claims and the following description.

In a first aspect of the invention there is provided an equalizing method for compensating for channel distortion in a plurality of carriers transmitted through a plurality of sub channels using scattered pilots having a period of a first predetermined number of symbols, comprising the steps of (a) extracting scattered pilots from a plurality of received carriers and estimating a channel characteristic value in the position of an extracted scattered pilot (b) providing a channel characteristic value in a scattered pilot position having a period of a third predetermined number of sub channels by updating the channel characteristic value of the scattered pilot position of a period having a second predetermined number of sub channels in every symbol, and by maintaining a previous channel characteristic value in the remaining scattered pilots, (c) providing the characteristic values of all the sub channels by estimating the characteristics of a sub channel through which data between scattered pilots is transmitted using the channel characteristic values in the scattered pilot position having the period of the third predetermined number of sub channels, and (d) compensating for the channel distortion of the received plurality of carriers on the basis of all the sub channel characteristic values.

In a second aspect of the invention there is provided an equalizer for an OFDM receiver for receiving a plurality of carriers including a scattered pilot having a period of a first predetermined number of symbols through a plurality of sub channels, comprising:

an extractor (106) for extracting a scattered pilot from a plurality of received carriers;

a channel estimator (110) for estimating a channel characteristic value in the position of the extracted scattered pilot using a coordinate value of the already revealed scattered pilot;

and further characterized by:

a channel characteristic updater (112) for updating the channel characteristic value of the scattered pilot position having a period of a second predetermined number of sub channels in every symbol, maintaining a previous channel characteristic value with respect to the remaining scattered pilots, and providing the channel characteristic value in the scattered pilot position having a period of a third predetermined number of sub channels;

an interpolator (114) for interpolating the channel characteristic value in the scattered pilot position having the period of the third predetermined number of sub channels and providing an interpolated coefficient; and

a digital filter (116) for multiplying the received plurality of carriers by the inverse of the interpolated coefficient and outputting data in which the channel distortion is compensated for.

For a better understanding of the invention, and to show how embodiments of the same may be carried into effect, reference will now be made, by way of example, to the accompanying diagrammatic drawings, in which:

Figure 1 shows an example of the conventional distribution of scattered pilots;

Figure 2 shows an example of the modified distribution of a scattered pilots provided in the preferred embodiment of the present invention;

Figure 3 is a block diagram according to a preferred embodiment of an equalizer for an OFDM receiver; and

Figure 4 is a block diagram of a coefficient interpolator shown in Figure 3.

First, a preferred equalizing method will be described as follows.

STEP 1: a channel characteristic value in the position of an extracted scattered pilot is estimated by revealing which symbol is received among four symbols and extracting the scattered pilot from the received symbol.

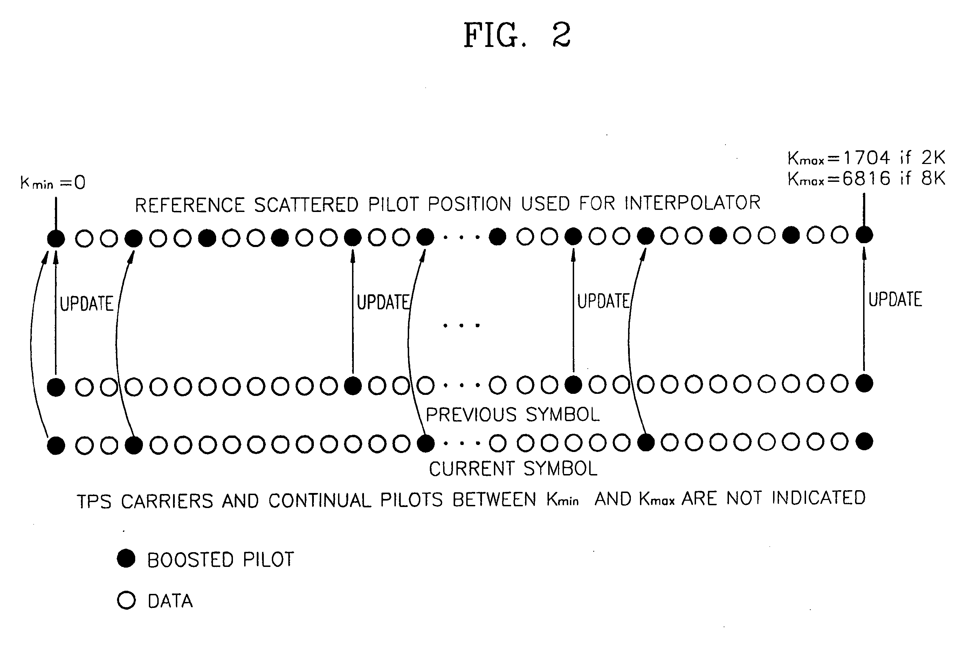

STEP 2: a channel characteristic value in the position of the scattered pilot having a three sub channel period as shown in Figure 2 is obtained by updating the sub channel through which the scattered pilot is transferred in every symbol into a new value and maintaining the updated value over the next three symbol interval.

As shown in Figure 2, an upper first symbol shows channel characteristics in the position of scattered pilots having a three sub channel period applied to the symbols starting from a received fifth symbol. The sub channel through which the scattered pilot is transmitted in every symbol is updated to a new value. Over the next three symbol intervals, the updated value is maintained.

Since the sub channel through which each scattered pilot is transmitted is used for transferring the scattered pilot once every four symbols, when the characteristic of the sub channel through which the scattered pilot is transferred in every symbol is updated to a new value and the value is maintained over four symbols, it is possible to adapt to the change of time of the channel.

STEP 3: the characteristics of two sub channels through which data between two adjacent scattered pilots are transmitted is estimated by interpolating the channel characteristic value of the position of the scattered pilot estimated in STEP 2.

Here, in a constant interpolation, the characteristics of three sub channels are calculated in the same manner, considering that the characteristic of a sub channel through which the scattered pilot is transmitted is the same as that of the sub channel through which the following two data are transmitted when the characteristics of the sub channel hardly changes. In another method, the characteristics of the two sub channels through which data are transmitted are calculated by a linear interpolation. In still another method, a windowed finite impulse response (FIR) filter having a higher interpolation performance is used.

Here, the structure of the equalizer is simple when constant interpolation or linear interpolation are used. However, the accuracy is lower than in the interpolating method according to the windowed FIR filter. When the interpolating method by the windowed FIR filter is used, the accuracy becomes higher. However, an error may be generated in the starting portion of the symbol since the position of the scattered pilot is continuous at the end and the start of the symbol. Therefore, the constant interpolation or the linear interpolation is used at the starting portion of the symbol. The interpolation by the windowed FIR filter is used in the other portions. Accordingly, equalizing performance is improved.

STEP 4: to estimate the characteristics of the sub channels through which data are transmitted means that the characteristics of all the sub channels are known. Therefore, the amplitude and phase distortion, i.e., the channel distortion, is compensated for by multiplying the transmitted sub channel data by the inverse of the characteristic of the sub channel.

Since the equalizer compensates for frequency distortion in units of a symbol, in a frequency domain, the following equation 1 is obtained when the characteristics of a channel, transmitted data, and received data are H(f), X(f), and R(f).

$$R_k(f) = H_k(f) \cdot X_k(f) \quad \cdots \quad (1)$$

wherein k represents the index of a sub channel.

The sub channel through which a pilot is transmitted can be represented as the following equation 2. The amplitude characteristics and the phase characteristics of the sub channel can be obtained from the equation 3.

$$R_k(f) = H_k(f) \cdot P_k(f) \quad \cdots \quad (2)$$

wherein, P(f) represents a scattered pilot.

$$H_k(f) = \frac{R_k(f)}{P_k(f)} \quad \cdots \quad (3)$$

In the case of an 8K mode, the number of sub channels obtained from the scattered pilots of a modified distribution shown in Figure 2 is 6816/3. The characteristics of the 6816x2/3 data channel are obtained by an interpolation using the characteristics of the sub channels. The constant interpolation used in every symbol can be represented by the following equation 4.

$$H_{p(k)}(f) = H_{d(1)}(f) = H_{d(2)}(f) \quad \cdots \quad (4)$$

A linear interpolation used in every symbol will be described as follows. When the characteristic of a channel through which the scattered pilot is transmitted is $H_{P(k)}(f)$, the characteristic of a channel through which an adjacent next pilot is transmitted is $H_{P(k+1)}(f)$. When the characteristics of the sub channels through which data between the sub channels of the two scattered pilots are transmitted are $H_{d(1)}(f)$ and $H_{d(2)}(f)$, they can be obtained through the equations 5 and 6.

$$H_{d(1)}(f) = \frac{H_{P(k+1)}(f) - H_{P(k)}(f)}{3} + H_{P(k)}(f) \quad \cdots \quad (5)$$

$$H_{d(2)}(f) = \frac{H_{P(k+1)}(f) - H_{P(k)}(f)}{3} \times 2 + H_{P(k)}(f) \quad \cdots \quad (6)$$

The constant interpolation or the linear interpolation is performed to every starting portion twelve carriers and an interpolation by a windowed FIR filter is performed to the other portions. The windowed FIR filter uses a low pass filter whose sampling frequency is three times a carrier frequency.

When the characteristics of the scattered pilot are filtered by the windowed FIR filter, the characteristics of the two sub channels between the scattered pilots are calculated and output. Namely, when the characteristics of the filter are F(f), the characteristics of all the channels are obtained by performing a convolution with respect to the characteristics of the scattered pilot and of the filter F(f). Namely, the characteristics of all the channels H(f) can be obtained as follows.

$$H(f) = H_p(f) \cdot F(f) \quad \cdots \quad (7)$$

The equalized output represented in the equation 8 is obtained by obtaining the characteristics of all the sub channels by the above method and multiplying the received data by the inverse of the characteristic of the sub channel.

$$R_k(f) \cdot \frac{1}{H_k} = H_k(f) \cdot X_k(f) \cdot \frac{1}{H_k} = X_k(f) \quad \cdots \quad (8)$$

Conveniently, it is not necessary to trace the position of the scattered pilot since the position of the scattered pilot does not change. It can be estimated the characteristics of the channel by calculating values between the scattered pilots by constant interpolation or linear interpolation since the distance between the scattered pilots becomes two sub channels.

However, interpolation by the windowed FIR filter can be used in order to enhance the interpolation performance. When the characteristics of all the sub channels are estimated, the equalization in the frequency domain can be performed by multiplying the received signal by the inverse of the channel characteristics value. The equalization becomes very simple since it has the structure of an equalizer having a one tap filter.

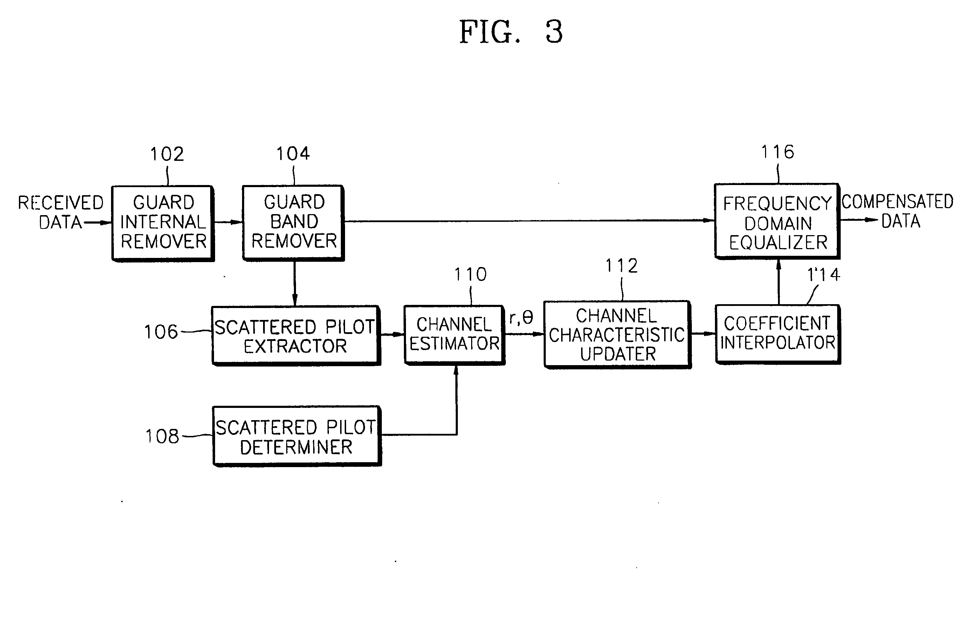

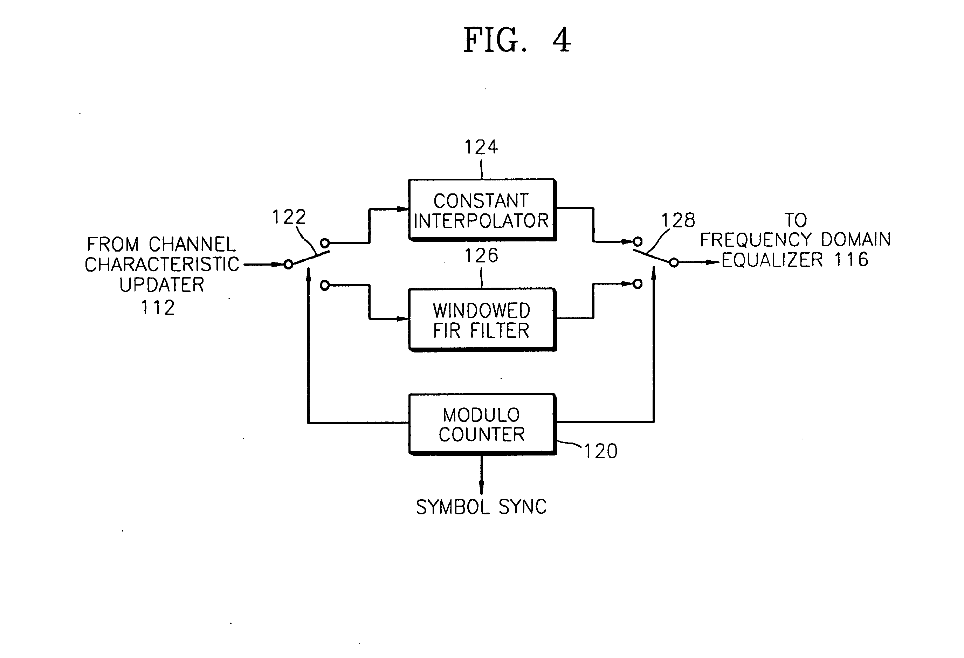

The equalizer for the OFDM receiver will now be described with reference to Figures. 3 and 4.

In Figure 3, a guard interval remover 102 removes a cyclic prefix (CP) corresponding to a guard interval from the received data. A guard band remover 104 performs a fast Fourier transform (FFT) on data output from the guard interval remover 102 and removes the guard band included in the fast Fourier transformed data in units of one symbol in order to convert the data into the data of a frequency domain since the data output from the guard interval remover 102 is data of a time domain. Here, in the case of an 8K mode, each symbol is formed of 6817 carriers. The symbols are transmitted for a duration Ts. The duration Ts includes an effective symbol part interval for transmitting the 6817 carriers and a guard interval.

A scattered pilot extractor 106 extracts the scattered pilot from data output from the guard band remover 104, namely, the 6817 carriers in every symbol in the case of an 8K mode. Since the scattered pilots have a boosted power level, the scattered pilot extractor 106 examines a correlation between the data from which the guard band has been removed and a reference sequence, and extracts the scattered pilot. Since the reference sequence is one symbol pattern data among four symbols, it is possible to find out which is the symbol received at present among the four symbols. Since the scattered pilot is repeated over a four symbol period, the position of the scattered pilot of the four symbols is automatically revealed by revealing the position of the scattered pilot of one symbol. Therefore, it is possible to correctly reveal the position of the scattered pilot of one symbol using the reference sequence by the scattered pilot extractor 106. With respect to the next three symbols, the received level value is output in the already revealed position of the scattered pilot.

Here, the boosted power level of the received scattered pilot is $(4/3)^2$. However, the scattered pilot according to the positions of the respective scattered pilots of the four symbol period during transmission has a coordinate value of (4/3,0) or (-4/3,0). Since this coordinate value, i.e., phase information, is already revealed by a scattered pilot determiner 108, the coordinate value of the scattered pilot extracted from the scattered pilot extractor 106 is output to a channel estimator 110.

The channel estimator 110 outputs the channel characteristic value in the position of the scattered pilot by channel estimating using a coordinate value according to the position of the scattered pilot output from the scattered pilot determiner 108. Namely, the channel estimator 110 compares the boosted level of the scattered pilot extracted by the scattered pilot extractor 106 with the original coordinate value and outputs a value (r) for compensating for the amplitude distortion and a value (θ) for compensating for the phase distortion.

A channel characteristic updater 112 updates the channel characteristic value of the sub channel through which each scattered pilot is transmitted into a new value in every symbol and maintains the updated value during the next three symbols. By doing so, an equalizing coefficient is updated into a new value in the scattered pilot position of the 12 sub channel distance in every symbol. The equalizing coefficients in the remaining scattered pilot positions maintain their previous values. The distance between the sub channels through which the scattered pilots are transmitted is two sub channels. However, the current channel characteristics of the scattered pilot are reflected by 1/4 (12 sub channel distance) in every symbol. Accordingly, it is possible to adapt to the characteristics of the channel changing as time goes by.

A coefficient interpolator 114 performs linear interpolation, constant interpolation or windowed FIR filter interpolation on the basis of the channel characteristic value in the pilot position of the three sub channel period in which the channel characteristics of the scattered pilots are updated by a distance of 12 sub channels in every symbol provided from the channel characteristic updater 112, and outputs the interpolated coefficients in order to estimate the sub channel characteristics of the data of the two sub channels between pilots.

A frequency domain equalizer 116 can be constructed of a filter having one tap, namely, a multiplier. The frequency domain equalizer 116 outputs data compensated by multiplying the data output from the guard band remover 104 by the inverse of the coefficient interpolated by the coefficient interpolator 114.

Figure 4 is a block diagram of the coefficient interpolator 114 shown in Figure 3. In Figure 4, a modulo counter 120 modulo counts the output of the channel characteristic updater 112 shown in Figure 3 according to a symbol synchronizing signal from 0 to 6816 since one symbol is comprised of 6817 effective carriers and generates a select control signal when numbers to a predetermined number (here, 11) in the starting portion of every symbol are counted.

A divider 122 constituted of a demultiplexer outputs to a constant interpolator 124 the channel characteristic values in the starting portion of every symbol among the channel characteristic values in the scattered pilot position output from the channel characteristic updater 112 according to the select control signal output from the modulo counter 120, and outputs the remaining channel characteristic values to a windowed FIR filter 126. The constant interpolator 124 can be replaced by a linear interpolator. The windowed FIR filter 126 is constituted of a low pass filter whose sampling frequency is three times the carrier frequency.

A selector 128 constituted of a multiplexer selects the output of the constant interpolator 124 in the case of the starting portion of a symbol according to the select control signal generated by the modulo counter 120, otherwise selects the windowed FIR filter 126, and outputs the selected signal to the frequency domain equalizer 116 shown in Figure 3. Figure 4 shows the divider 122 and the selector 128. However, the divider 122 may be omitted.

In the equalizing method described above, the amount of calculating is reduced by reducing the distance between scattered pilots, adapting to the channel changing as time goes by. Also, the structure of the interpolator employed in the equalizer described above is simple, since only the characteristics of two data sub channels are interpolated. It is possible to improve the performance of the equalizer by operating two types of interpolators.

## Claims

1. An equalizing method for compensating for channel distortion in a plurality of carriers transmitted through a plurality of sub channels using scattered pilots having a period of a first predetermined number of symbols, comprising the steps of:

   (a) extracting (106) scattered pilots from a plurality of received carriers and estimating a channel characteristic value in the position of an extracted scattered pilot; and further **characterized by** the steps of:
   (b) providing (112) a channel characteristic value in a scattered pilot position having a period of a third predetermined number of sub channels by updating the channel characteristic value of the scattered pilot position having a period of a second predetermined number of sub channels in every symbol, and by maintaining a previous channel characteristic value in the remaining scattered pilots;
   (c) providing (114) the characteristic values of all the sub channels by estimating the characteristics of a sub channel through which data between scattered pilots is transmitted using the channel characteristic values in the scattered pilot position having the period of the third predetermined number of sub channels; and
   (d) compensating (116) for the channel distortion of the received plurality of carriers on the basis of all the sub channel characteristic values.

2. The method of claim 1, wherein an updated channel characteristic value of the scattered pilot of the period of the second predetermined number of sub channels is maintained during the first predetermined number of symbols in the step (b).

3. The method of claim 1 or 2, wherein the channel characteristic values in the scattered pilot position having the period of the third predetermined number of sub channels are interpolated by a predetermined interpolation and interpolated coefficient is output in order to estimate the characteristics of the sub channels through which data between the scattered pilots is transmitted, in the step (c).

4.  The method of claim 3, wherein the channel distortion is compensated for by multiplying the received carrier by the inverse of the interpolated coefficient in the step (d).

5.  The method of claim 3 or 4, wherein the predetermined interpolation is one among a constant interpolation, a linear interpolation, and a windowed FIR filtering interpolation.

6.  The method of claim 5, wherein one of constant interpolation and linear interpolation is used with respect to a predetermined number of carriers in the starting portion of every symbol and interpolation by windowed FIR filtering is used with respect to the remaining carriers, in the step (c).

7.  The method of any of claims 1 to 6, wherein the first predetermined number is 4, the second predetermined number is 12, and the third predetermined number is 3.

8.  An equalizer for an OFDM receiver for receiving a plurality of carriers including a scattered pilot having a period of a first predetermined number of symbols through a plurality of sub channels, comprising:

    an extractor (106) for extracting a scattered pilot from a plurality of received carriers;
    a channel estimator (110) for estimating a channel characteristic value in the position of the extracted scattered pilot using a coordinate value of the already revealed scattered pilot;

    and further **characterized by**:

    a channel characteristic updater (112) for updating the channel characteristic value of the scattered pilot position having a period of a second predetermined number of sub channels in every symbol, maintaining a previous channel characteristic value with respect to the remaining scattered pilots, and providing the channel characteristic value in the scattered pilot position having a period of a third predetermined number of sub channels;
    an interpolator (114) for interpolating the channel characteristic value in the scattered pilot position having the period of the third predetermined number of sub channels and providing an interpolated coefficient; and
    a digital filter (116) for multiplying the received plurality of carriers by the inverse of the interpolated coefficient and outputting data in which the channel distortion is compensated for.

9.  The equalizer of claim 8, further comprising a scattered pilot determiner (108) for generating a coordinate value according to the position of the already revealed scattered pilot and outputting the coordinate value to the channel estimator.

10. The equalizer of claim 8 or 9, wherein the extractor (106) examines a correlation between the plurality of received carriers and a reference sequence and extracts a scattered pilot, and wherein the reference sequence is one symbol pattern data among the first predetermined number of symbols.

11. The equalizer of any of claims 8 to 10, wherein the digital filter (116) comprises a multiplier for multiplying the plurality of received carriers by the inverse of the interpolated coefficient.

12. The equalizer of any of claims 8 to 11, wherein the interpolation (114) is one among constant interpolation (124), linear interpolation, and windowed FIR filter interpolation (126).

13. The equalizer of any of claims 8 to 12, wherein the interpolator (114) comprises:

    a modulo counter (120) for modulo counting effective carriers of one symbol and generating a selection control signal when a first predetermined number of carriers in the starting portion of every symbol are counted;
    a constant interpolator (124) for interpolating the characteristic value of the sub channels of the data between the scattered pilots into the same value as the channel characteristic value of the previous scattered pilot position output from the channel characteristic updater;
    a windowed FIR filter (126) for interpolating the characteristic values of the sub channels of the data between the scattered pilots by filtering the channel characteristic values in the scattered pilot position of the period of a second predetermined number of sub channels, adjacent to said predetermined first number of carriers, output from the channel characteristic updater; and
    a selector (128) for selecting the output of the constant interpolator in the starting portion of the symbol and the output of the windowed FIR filter in the other portions of the symbol, according to the selection control signal.

**14.** The equalizer of claim 13, wherein the windowed FIR filter (126) is a low pass filter whose sampling frequency is third predetermined number of times the carrier frequency.

**15.** The equalizer of any of claims 8 to 13, wherein the interpolator comprises:

a modulo counter (120) for modulo counting effective carriers of one symbol and generating a selection control signal when a predetermined number of carriers in the starting portion of every symbol are counted;

a linear interpolator for linear interpolating the channel characteristic value of the adjacent scattered pilot position output from the channel characteristic updater;

a windowed FIR filter (126) for interpolating the characteristic values of the sub channels of the data between the scattered pilots by filtering the channel characteristic values in the adjacent scattered pilot position output from the channel characteristic updater; and

a selector (128) for selecting the output of the linear interpolator in the starting portion of the symbol and the output of the windowed FIR filter in the other portions, according to the selection control signal.

**16.** The equalizer of any of claims 8 to 15, wherein the first predetermined number is 4, the second predetermined number is 12, and the third predetermined number is 3.

**Patentansprüche**

**1.** Entzerrungsverfahren zum Kompensieren von Kanalverzerrung bei einer Vielzahl von Trägern, die über eine Vielzahl von Unterkanälen gesendet werden, unter Verwendung verstreuter Piloten mit einer Periode einer ersten vorgegebenen Anzahl von Symbolen, die folgenden Schritte umfassend:

(a) Extrahieren (106) verstreuter Piloten aus einer Vielzahl empfangener Träger und Schätzen eines Kanalkennwerts an der Position eines extrahierten verstreuten Piloten; und des Weiteren durch die folgenden Schritte **gekennzeichnet**:

(b) Bereitstellen (112) eines Kanalkennwerts an einer Position von verstreutem Piloten mit einer Periode einer dritten vorgegebenen Anzahl von Unterkanälen durch Aktualisieren des Kanalkennwerts der Position von verstreutem Piloten mit einer Periode einer zweiten vorgegebenen Anzahl von Unterkanälen bei jedem Symbol und durch Beibehalten eines vorherigen Kanalkennwerts bei den verbleibenden verstreuten Piloten;

(c) Bereitstellen (114) der Kennwerte aller Unterkanäle durch Schätzen der Kennlinien eines Unterkanals, über den Daten zwischen verstreuten Piloten gesendet werden, unter Verwendung der Kanalkennwerte an der Position von verstreutem Piloten mit der Periode der dritten vorgegebenen Anzahl von Unterkanälen; und

(d) Kompensieren (116) der Kanalverzerrung der empfangenen Vielzahl von Trägern auf der Basis aller Unterkanalkennwerte.

**2.** Verfahren nach Anspruch 1, wobei ein aktualisierter Kanalkennwert des verstreuten Piloten der Periode der zweiten vorgegebenen Anzahl von Unterkanälen während der ersten vorgegebenen Anzahl von Symbolen in dem Schritt (b) beibehalten wird.

**3.** Verfahren nach Anspruch 1 oder 2, wobei die Kanalkennwerte an der Position von verstreutem Piloten mit der Periode der dritten vorgegebenen Anzahl von Unterkanälen durch eine vorgegebene Interpolation interpoliert werden und der interpolierte Koeffizient ausgegeben wird, um die Kennlinien der Unterkanäle, über die Daten zwischen den verstreuten Piloten gesendet werden, in dem Schritt (c) zu schätzen.

**4.** Verfahren nach Anspruch 3, wobei die Kanalverzerrung durch Multiplizieren des empfangenen Trägers mit dem Kehrwert des interpolierten Koeffizienten in dem Schritt (d) kompensiert wird.

**5.** Verfahren nach Anspruch 3 oder 4, wobei die vorgegebene Interpolation eine unter einer konstanten Interpolation, einer linearen Interpolation und einer gefensterten FIR-Filterinterpolation ist.

**6.** Verfahren nach Anspruch 5, wobei in dem Schritt (c) eine von konstanter Interpolation und linearer Interpolation in Bezug auf eine vorgegebene Anzahl von Trägern in dem Anfangsabschnitt jedes Symbols verwendet wird und Interpolation durch gefenstertes FIR-Filtern in Bezug auf die verbleibenden Träger verwendet wird.

**7.** Verfahren nach einem der Ansprüche 1 bis 6, wobei die erste vorgegebene Anzahl 4 ist, die zweite vorgegebene Anzahl 12 ist und die dritte vorgegebene Anzahl 3 ist.

8. Entzerrer für einen OFDM-Empfänger, um eine Vielzahl von Trägern, die einen verstreuten Piloten mit einer Periode einer ersten vorgegebenen Anzahl von Symbolen enthalten, über eine Vielzahl von Unterkanälen zu empfangen, umfassend:

   einen Extrahierer (106) zum Extrahieren eines verstreuten Piloten aus einer Vielzahl empfangener Träger;
   einen Kanalschätzer (110) zum Schätzen eines Kanalkennwerts an der Position des extrahierten verstreuten Piloten unter Verwendung eines Koordinatenwerts des bereits offengelegten verstreuten Piloten; und des Weiteren **gekennzeichnet durch**:

   einen Kanalkennlinienaktualisierer (112) zum Aktualisieren des Kanalkennwerts der Position von verstreutem Piloten mit einer Periode einer zweiten vorgegebenen Anzahl von Unterkanälen bei jedem Symbol, Beibehalten eines vorherigen Kanalkennwerts in Bezug auf die verbleibenden verstreuten Piloten und Bereitstellen des Kanalkennwerts an der Position von verstreutem Piloten mit einer Periode einer dritten vorgegebenen Anzahl von Unterkanälen;
   einen Interpolator (114) zum Interpolieren des Kanalkennwerts an der Position von verstreutem Piloten mit der Periode der dritten vorgegebenen Anzahl von Unterkanälen und Bereitstellen eines interpolierten Koeffizienten; und
   ein digitales Filter (116) zum Multiplizieren der empfangenen Vielzahl von Trägern mit dem Kehrwert des interpolierten Koeffizienten und Ausgeben von Daten, bei denen die Kanalverzerrung kompensiert wird.

9. Entzerrer nach Anspruch 8, des Weiteren einen Determinator für den verstreuten Piloten (108) zum Erzeugen eines Koordinatenwerts entsprechend der Position des bereits offengelegten verstreuten Piloten und zum Ausgeben des Koordinatenwerts an den Kanalschätzer umfassend.

10. Entzerrer nach Anspruch 8 oder 9, wobei der Extrahierer (106) eine Korrelation zwischen der Vielzahl empfangener Träger und einer Referenzfolge untersucht und einen verstreuten Piloten extrahiert und wobei die Bezugsfolge Symbolmusterdaten unter der ersten vorgegebenen Anzahl von Symbolen ist.

11. Entzerrer nach einem der Ansprüche 8 bis 10, wobei das digitale Filter (116) einen Multiplizierer zum Multiplizieren der Vielzahl empfangener Träger mit dem Kehrwert des interpolierten Koeffizienten umfasst.

12. Entzerrer nach einem der Ansprüche 8 bis 11, wobei die Interpolation (114) eine unter konstanter Interpolation (124), linearer Interpolation und gefensterter FIR-Filterinterpolation (126) ist.

13. Entzerrer nach einem der Ansprüche 8 bis 12, wobei der Interpolator (114) Folgendes umfasst:

   einen Modulo-Zähler (120) zum Modulo-Zählen effektiver Träger eines Symbols und Erzeugen eines Auswahlsteuersignals, wenn eine erste vorgegebene Anzahl von Trägern an der Anfangsposition jedes Symbols gezählt wird;
   einen konstanten Interpolator (124) zum Interpolieren des Kennwerts der Unterkanäle der Daten zwischen den verstreuten Piloten zu demselben Wert wie der von dem Kanalkennlinienaktualisierer ausgegebene Kanalkennwert der vorherigen Position von verstreutem Piloten;
   ein gefenstertes FIR-Filter (126) zum Interpolieren der Kennwerte der Unterkanäle der Daten zwischen den verstreuten Piloten durch Filtern der von dem Kanalkennlinienaktualisierer ausgegebenen Kanalkennwerte an der Position von verstreutem Piloten der Periode einer zweiten vorgegebenen Anzahl von Unterkanälen, die an die vorgegebene erste Anzahl von Trägern angrenzt; und
   einen Selektor (128) zum Auswählen der Ausgabe des konstanten Interpolators an der Anfangsposition des Symbols und der Ausgabe des gefensterten FIR-Filters in den anderen Abschnitten des Symbols entsprechend dem Auswahlsteuersignal.

14. Entzerrer nach Anspruch 13, wobei das gefensterte FIR-Filter (126) ein Tiefpassfilter ist, dessen Abtastfrequenz ein drittes vorgegebenes Vielfaches der Trägerfrequenz ist.

15. Entzerrer nach einem der Ansprüche 8 bis 13, wobei der Interpolator Folgendes umfasst:

   einen Modulo-Zähler (120) zum Modulo-Zählen effektiver Träger eines Symbols und Erzeugen eines Auswahlsteuersignals, wenn eine vorgegebene Anzahl von Trägern an der Anfangsposition jedes Symbols gezählt wird;
einen linearen Interpolator zum linearen Interpolieren des von dem Kanalkennlinienaktualisierer ausgegebenen Kanalkennwerts der angrenzenden Position von verstreutem Piloten;
ein gefenstertes FIR-Filter (126) zum Interpolieren der Kennwerte der Unterkanäle der Daten zwischen den verstreuten Piloten durch Filtern der von dem Kanalkennlinienaktualisierer ausgegebenen Kanalkennwerte an der angrenzenden Position von verstreutem Piloten; und
einen Selektor (128) zum Auswählen der Ausgabe des linearen Interpolators an der Anfangsposition des Symbols und der Ausgabe des gefensterten FIR-Filters in den anderen Abschnitten nach dem Auswahlsteuersignal.

16. Entzerrer nach einem der Ansprüche 8 bis 15, wobei die erste vorgegebene Anzahl 4 ist, die zweite vorgegebene Anzahl 12 ist und die dritte vorgegebene Anzahl 3 ist.

**Revendications**

1. Procédé d'égalisation pour compenser une distorsion de canal dans une pluralité de porteuses transmises à travers une pluralité de sous-canaux en utilisant des pilotes diffusés ayant une période d'un premier nombre prédéterminé de symboles, comportant les étapes consistant à :

    (a) extraire (106) des pilotes diffusés à partir d'une pluralité de porteuses reçues et estimer une valeur de caractéristique de canal dans la position d'un pilote diffusé extrait, et **caractérisé de plus par** les étapes consistant à :
    (b) fournir (112) une valeur de caractéristique de canal dans une position de pilote diffusé ayant une période d'un troisième nombre prédéterminé de sous-canaux en mettant à jour la valeur de caractéristique de canal de la position de pilote diffusé ayant une période d'un deuxième nombre prédéterminé de sous-canaux dans chaque symbole, et en maintenant une précédente valeur de caractéristique de canal dans les pilotes diffusés restants,
    (c) fournir (114) les valeurs de caractéristiques de tous les sous-canaux en estimant les caractéristiques d'un sous-canal à travers lequel des données entre des pilotes diffusés sont transmises en utilisant les valeurs de caractéristiques de canaux dans la position de pilote diffusé ayant la période du troisième nombre prédéterminé de sous-canaux, et
    (d) compenser (116) la distorsion de canal de la pluralité de porteuses reçues sur la base de toutes les valeurs de caractéristiques de sous-canaux.

2. Procédé selon la revendication 1, dans lequel une valeur de caractéristique de canal mise à jour du pilote diffusé de la période du deuxième nombre prédéterminé de sous-canaux est maintenue pendant le premier nombre prédéterminé de symboles dans l'étape (b).

3. Procédé selon la revendication 1 ou 2, dans lequel les valeurs de caractéristiques de canaux dans la position de pilote diffusé ayant la période du troisième nombre prédéterminé de sous-canaux sont interpolées par une interpolation prédéterminée et un coefficient interpolé est délivré en sortie afin d'estimer les caractéristiques des sous-canaux à travers lesquels des données entre les pilotes diffusés sont transmises, dans l'étape (c).

4. Procédé selon la revendication 3, dans lequel la distorsion de canal est compensée en multipliant la porteuse reçue par l'inverse du coefficient interpolé dans l'étape (d).

5. Procédé selon la revendication 3 ou 4, dans lequel l'interpolation prédéterminée est l'une parmi une interpolation constante, une interpolation linéaire, et une interpolation par filtrage FIR à fenêtre.

6. Procédé selon la revendication 5, dans lequel l'une d'une interpolation constante et d'une interpolation linéaire est utilisée pour un nombre prédéterminé de porteuses dans la partie de début de chaque symbole et une interpolation par filtrage FIR à fenêtre est utilisée pour les porteuses restantes, dans l'étape (c).

7. Procédé selon l'une quelconque des revendications 1 à 6, dans lequel le premier nombre prédéterminé est 4, le deuxième nombre prédéterminé est 12, et le troisième nombre prédéterminé est 3.

8. Egaliseur pour un récepteur OFDM pour recevoir une pluralité de porteuses incluant un pilote diffusé ayant une période d'un premier nombre prédéterminé de symboles par l'intermédiaire d'une pluralité de sous-canaux, comportant :

un extracteur (106) pour extraire un pilote diffusé à partir d'une pluralité de porteuses reçues,
un estimateur de canal (110) pour estimer une valeur de caractéristique de canal dans la position du pilote diffusé extrait en utilisant une valeur de coordonnées du pilote diffusé déjà révélé,

et **caractérisé de plus par** :

des moyens de mise à jour de caractéristique de canal (112) pour mettre à jour la valeur de caractéristique de canal de la position de pilote diffusé ayant une période d'un deuxième nombre prédéterminé de sous-canaux dans chaque symbole, maintenir une précédente valeur de caractéristique de canal pour les pilotes diffusés restants, et fournir la valeur de caractéristique de canal dans la position de pilote diffusé ayant une période d'un troisième nombre prédéterminé de sous-canaux,
un interpolateur (114) pour interpoler la valeur de caractéristique de canal dans la position de pilote diffusé ayant la période du troisième nombre prédéterminé de sous-canaux et délivrer un coefficient interpolé, et
un filtre numérique (116) pour multiplier la pluralité de porteuses reçues par l'inverse du coefficient interpolé et délivrer en sortie des données dans lesquelles la distorsion de canal est compensée.

9. Egaliseur selon la revendication 8, comportant de plus des moyens de détermination de pilote diffusé (108) pour générer une valeur de coordonnées conformément à la position du pilote diffusé déjà révélé et délivrer en sortie la valeur de coordonnées à l'estimateur de canal.

10. Egaliseur selon la revendication 8 ou 9, dans lequel l'extracteur (106) étudie une corrélation entre la pluralité de porteuses reçues et une séquence de référence et extrait un pilote diffusé, et dans lequel la séquence de référence représente des données de motif d'un symbole parmi le premier nombre prédéterminé de symboles.

11. Egaliseur selon l'une quelconque des revendications 8 à 10, dans lequel le filtre numérique (116) comporte un multiplicateur pour multiplier la pluralité de porteuses reçues par l'inverse du coefficient interpolé.

12. Egaliseur selon l'une quelconque des revendications 8 à 11, dans lequel l'interpolation (114) est l'une parmi une interpolation constante (124), une interpolation linéaire, et une interpolation par filtre FIR à fenêtre (126).

13. Egaliseur selon l'une quelconque des revendications 8 à 12, dans lequel l'interpolateur (114) comporte :

un compteur de modulo (120) pour calculer un modulo de porteuses effectives d'un symbole et générer un signal de commande de sélection lorsqu'un premier nombre prédéterminé de porteuses dans la partie de début de chaque symbole sont comptées,
un interpolateur constant (124) pour interpoler la valeur de caractéristique des sous-canaux des données entre les pilotes diffusés dans la même valeur que la valeur de caractéristique de canal de la précédente position de pilote diffusé délivrée en sortie par les moyens de mise à jour de caractéristique de canal,
un filtre FIR à fenêtre (126) pour interpoler les valeurs de caractéristiques des sous-canaux des données entre les pilotes diffusés en filtrant les valeurs de caractéristiques de canaux dans la position de pilote diffusé de la période d'un deuxième nombre prédéterminé de sous-canaux, adjacente audit premier nombre prédéterminé de porteuses, délivrée en sortie par les moyens de mise à jour de caractéristique de canal, et
un sélecteur (128) pour sélectionner la sortie de l'interpolateur constant dans la partie de début du symbole et la sortie du filtre FIR à fenêtre dans les autres parties du symbole, conformément au signal de commande de sélection.

14. Egaliseur selon la revendication 13, dans lequel le filtre FIR à fenêtre (126) est un filtre passe-bas dont la fréquence d'échantillonnage est un troisième nombre prédéterminé de fois la fréquence de porteuse.

15. Egaliseur selon l'une quelconque des revendications 8 à 13, dans lequel l'interpolateur comporte :

un compteur de modulo (120) pour compter le modulo de porteuses effectives d'un symbole et générer un signal de commande de sélection lorsqu'un nombre prédéterminé de porteuses dans la partie de début de chaque symbole sont comptées,
un interpolateur linéaire pour effectuer une interpolation linéaire de la valeur de caractéristique de canal de la position de pilote diffusé adjacente délivrée en sortie par les moyens de mise à jour de caractéristique de canal,
un filtre FIR à fenêtre (126) pour interpoler les valeurs de caractéristiques des sous-canaux des données entre les pilotes diffusés en filtrant les valeurs de caractéristiques de canaux dans la position de pilote diffusé adjacente délivrée en sortie par les moyens de mise à jour de caractéristique de canal, et

un sélecteur (128) pour sélectionner la sortie de l'interpolateur linéaire dans la partie de début du symbole et la sortie du filtre FIR à fenêtre dans les autres parties, conformément au signal de commande de sélection.

16. Egaliseur selon l'une quelconque des revendications 8 à 15, dans lequel le premier nombre prédéterminé est 4, le deuxième nombre prédéterminé est 12, et le troisième nombre prédéterminé est 3.

# FIG. 1

Kmin =0

Kmax=1704 if 2K
Kmax=6816 if 8K

SYMBOLS 67
SYMBOLS 0
SYMBOLS 1
SYMBOLS 2
SYMBOLS 3

TPS CARRIERS AND CONTINUAL PILOTS BETWEEN Kmin AND Kmax ARE NOT INDICATED

● BOOSTED PILOT

○ DATA

EP 0 898 381 B1

# FIG. 2

$K_{min} = 0$

$K_{max} = 1704$ if 2K
$K_{max} = 6816$ if 8K

REFERENCE SCATTERED PILOT POSITION USED FOR INTERPOLATOR

UPDATE   UPDATE   UPDATE   UPDATE

PREVIOUS SYMBOL

CURRENT SYMBOL

TPS CARRIERS AND CONTINUAL PILOTS BETWEEN $K_{min}$ AND $K_{max}$ ARE NOT INDICATED

● BOOSTED PILOT

○ DATA

EP 0 898 381 B1

# FIG. 3

RECEIVED DATA → **GUARD INTERNAL REMOVER** (102) → **GUARD BAND REMOVER** (104) →

→ **FREQUENCY DOMAIN EQUALIZER** (116) → COMPENSATED DATA

**SCATTERED PILOT EXTRACTOR** (106) → **CHANNEL ESTIMATOR** (110) → $r, \theta$ → **CHANNEL CHARACTERISTIC UPDATER** (112) → **COEFFICIENT INTERPOLATOR** (114)

**SCATTERED PILOT DETERMINER** (108)

EP 0 898 381 B1

# FIG. 4

FROM CHANNEL
CHARACTERISTIC
UPDATER
112

122

124
CONSTANT
INTERPOLATOR

126
WINDOWED
FIR FILTER

128
TO
FREQUENCY DOMAIN
EQUALIZER 116

MODULO
COUNTER
120

SYMBOL SYNC

EP 0 898 381 B1